(19) **Europäisches Patentamt / European Patent Office / Office européen des brevets**

(11) **EP 1 565 812 B1**

(12) **FASCICULE DE BREVET EUROPEEN**

(45) Date de publication et mention
de la délivrance du brevet:
**26.03.2008 Bulletin 2008/13**

(21) Numéro de dépôt: **03786055.8**

(22) Date de dépôt: **13.11.2003**

(51) Int Cl.:
***G06F 7/52*** *(2006.01)*

(86) Numéro de dépôt international:
**PCT/FR2003/050119**

(87) Numéro de publication internationale:
**WO 2004/046017 (03.06.2004 Gazette 2004/23)**

(54) **PROCEDE DE DIVISION ENTIERE CONTRE LES ATTAQUES A CANAUX CACHES**

VERFAHREN ZUR GANZZAHLDIVISION GEGEN ANGRIFFE AN VERSTECKTEN KANÄLEN

INTEGER DIVISION METHOD WHICH IS SECURE AGAINST COVERT CHANNEL ATTACKS

(84) Etats contractants désignés:
**AT BE BG CH CY CZ DE DK EE ES FI FR GB GR HU IE IT LI LU MC NL PT RO SE SI SK TR**

(30) Priorité: **15.11.2002 FR 0214281**

(43) Date de publication de la demande:
**24.08.2005 Bulletin 2005/34**

(73) Titulaire: **GEMPLUS**
**13420 Gemenos (FR)**

(72) Inventeurs:
• **JOYE, Marc**
**F-83640 SAINT ZACHARIE (FR)**

• **VILLEGAS, Karine**
**F-13420 GEMENOS (FR)**

(56) Documents cités:
• **A. MENEZES, P.C. VAN OORSCHOT, S.A VANSTONE: "Handbook of applied cryptography" 1996 , CRC PRESS XP002277222 ISBN: 0-8493-8523-7 page 593 page 598 -page 629**
• **WALTER C D: "MONTGOMERY'S MULTIPLICATION TECHNIQUE: HOW TO MAKE IT SMALLER AND FASTER" CRYPTOGRAPHIC HARDWARE AND EMBEDDED SYSTEMS. INTERNATIONAL WORKSHOP, XX, XX, août 1999 (1999-08), pages 80-93, XP000952220**

EP 1 565 812 B1

**Description**

L'invention concerne un procédé de division entière sécurisé contre les attaques de type à canal caché. L'invention est notamment intéressante pour réaliser des opérations de division dans un procédé cryptographique plus général, par exemple un procédé cryptographique à clé secrète ou publique. Un tel procédé cryptographique peut par exemple être mis en oeuvre dans des dispositifs électroniques tels que des cartes à puce.

La sécurité des procédés cryptographiques résident dans leur capacité à maintenir cachées les données confidentielles ou des données dérivées des données confidentielles qu'ils manipulent.

Un utilisateur malveillant peut éventuellement engager des attaques, visant à découvrir notamment des données confidentielles contenues et manipulées dans des traitements effectués par le dispositif de calcul exécutant un procédé cryptographique.

Parmi les attaques les plus connues, on peut citer les attaques à canaux cachés, simples ou différentielles. On entend par attaque à canal caché une attaque basée sur une grandeur physique mesurable de l'extérieur du dispositif, et dont l'analyse directe (attaque simple) ou l'analyse selon une méthode statistique (attaque différentielle) permet de découvrir des données contenues et manipulées dans des traitements réalisés dans le dispositif. Ces attaques ont notamment été dévoilées par Paul Kocher (Advances in Cryptology - CRYPTO'99, vol. 1666 of Lecture Notes in Computer Science, pp.388-397. Springer-Verlag, 1999).

Parmi les grandeurs physiques qui peuvent être exploitées à ces fins, on peut citer le temps d'exécution, la consommation en courant, le champ électromagnétique rayonné par la partie du composant utilisée pour exécuter le calcul, etc. Ces attaques sont basées sur le fait que, au cours de l'exécution d'un procédé, la manipulation d'un bit, c'est à dire son traitement par une instruction particulière, laisse une empreinte particulière sur la grandeur physique considérée, selon la valeur de ce bit et / ou selon l'instruction.

Les procédés cryptographiques utilisant comme opération de base une opération d'exponentiation modulaire de type $Y = X^D$, X, Y et D étant des nombres entiers ont été très largement étudiés ces dernières années. A titre d'exemple, on peut citer le procédé RSA, l'échange de clé selon Diffie-Hellman ou le procédé de signature DSA. Des progrès significatifs ont été réalisés pour protéger ces procédés contre les attaques à canaux cachés.

Le document "Handbook of applied cryptography" ISBN 0-8493-8523-7 décrit plusieurs procédés de réductions modulaires et de divisions.

Par contre, aucune étude n'a été faite sur la sécurisation des procédés cryptographiques utilisant comme opération élémentaire une division entière de type q = a div b et r = a mod b, a et b étant deux opérandes, q et r étant respectivement le quotient et le reste de la division entière de a par b. a et / ou b sont des données secrètes, par exemple des éléments d'une clé du procédé. Par exemple, le procédé de Barrett (P. Barret, "Implementing the RSA public key encryption algorithm on a standard digital signal processing", vol 263 of Lecture Notes in Computer Science, pp. 311-323, Springer Verlag, 1987), le procédé de Quisquater (US patent 5,166,978, nov 92) ou le procédé RSA mis en oeuvre selon le théorème des restes chinois (JJ Quisquater and C Couvreur, "Fast decipherment algorithm for RSA public key cryptosystem", Electronics Letters, vol 18, pp. 905-907, Octobre 1982) sont des procédés cryptographiques utilisant une division entière comme opération élémentaire.

Un procédé connu pour mettre en oeuvre une division entière est le procédé dit "papier crayon". Ce procédé reprend en pratique la méthode utilisée lorsqu'une telle opération est réalisée à la main. Ce procédé est rappelé ci-dessous.

Etant donné deux données $a = (a_{m-1}, ..., a_0)$ de m bits et $b = (b_{n-1}, ..., b_0)$ de n bits, n inférieur ou égal à m et $b_{n-1} \gamma 0$, le procédé de division dit "papier crayon" calcule le quotient q = a div b et le reste r = a div b. Pour cela, le procédé réalise successivement plusieurs divisions d'un entier A de n+1 bits par l'entier b de n bits. On doit avoir en pratique 0 [ A/b < 2, ce qui est le cas chaque fois que $b_{n-1} \gamma 0$.

Le reste r est un nombre de au plus n bits puisque r < b. Le quotient q est quant à lui un nombre de au plus m-n+1 bits puisque q = a div b [ a div $(b_{n-1}*2^{n-1})$ = a div $2^{n-1}$ = $(a_{m-1}, ..., a_{n-1})$ car b $\mu$ $b_{n-1}*2^{n-1}$ et $(a_{m-1}, ..., a_{n-1})$ est un nombre de m-n+1 bits. A la fin du procédé de division, le quotient q est mémorisé dans les m-n+1 bits de poids les plus faibles du registre contenant initialement le nombre a. Le bit de poids le plus fort du reste r est mémorisé dans un registre de 1 bit utilisé comme retenue (carry) pendant le calcul et les n-1 bits de poids les plus faibles du reste r sont mémorisés dans les n-1 bits de poids les plus forts du registre contenant initialement le nombre a.

Comme on travaille en base 2, le bit de quotient de la division entière A div b a seulement deux valeurs possibles : 0 ou 1. Aussi une manière simple de réaliser l'opération A div b consiste à soustraire b à A puis à tester le résultat : si le résultat de A - b est positif, alors A div b = 1, si le résultat de A - b est strictement négatif, alors A div b = 0.

Le procédé de division complet peut alors s'écrire de la manière suivante :

```
Entrée :  a = (0, a_{m-1}, ..., a_0)
          b = (b_{n-1}, ..., b_0)
Sortie :  q = a div b et r = a mod b
A = (0, a_{m-1}, …, a_{m-n+1})
Pour j = 1 à (m-n+1), faire :
     a <- SHL_{m+1}(a, 1) ; σ <- carry
     A <- SUB_n(A, b) ; σ <- σ OU carry
     si (¬σ = VRAI)  alors A <- ADD_n(A, b)
                     sinon lsb(a) = 1
 Fin Pour
```

<u>Procédé 1</u>

Dans ce procédé, et dans tout ce qui suit, les notations suivantes sont utilisées.

Le symbole "<-" et la notation y <- x la notation est utilisé pour indiquer le chargement du contenu d'un registre contenant une donnée x dans un registre dont le contenu est appelé y.

A est un mot de n bits correspondant au contenu des n bits de poids les plus forts du registre contenant initialement la donnée a. A est bien sûr modifié à chaque itération.

σ indique si la soustraction a été effectuée à tord ou pas (ie si le bit de quotient doit être égal à 0 ou à 1).

¬σ est le complément à 1 (encore appelé négation) de la variable σ. VRAI est une constante, égale à 1 dans un exemple.

lsb(a) est le bit de poids le plus faible du nombre a, également appelé bit le moins significatif de a.

$SHL_{m+1}(a, 1)$ est une opération de décalage à gauche de 1 bit dans le registre de m+1 bits contenant la donnée a, le bit sortant du registre étant mémorisé dans la variable carry et un bit égal à 0 étant entré en bit de poids le plus faible du registre contenant initialement la donnée a.

$ADD_n(A, b)$ est une opération d'addition des n bits du nombre b aux n bits du mot A. On notera que l'opération $SHL_n(a, 1)$ est équivalente à l'opération $ADD_n(a, a)$. Bien sûr l'addition $ADD_n(A, b)$ est réalisée en additionnant, dans un circuit d'addition de contenu de registre approprié, le contenu de deux registres contenant respectivement A et b.

$SUB_n(A, b)$ est une opération de soustraction du nombre b au mot A. Bien sûr la soustraction $SUB_n(A, b)$ est réalisée en soustrayant, dans un circuit approprié, le contenu d'un registre contenant la donnée b au contenu du registre contant le mot A.

Enfin, par abus de langage mais surtout par souci de clarté, on utilisera le même nom pour parler d'un registre et de son contenu. Ainsi le registre A est en fait le registre contenant la donnée A.

En résumé, le procédé 1 réalise les étapes suivantes :

- si a <- $SHL_{m+1}$(a, 1) génère une retenue (σ = carry = 1), cela signifie que $a_m$ = 1 (avant décalage) et donc que b doit être soustrait à A.
- si $a_{m+1}$ = 0 (avant décalage) et si A <- $SUB_n$(A, b) génère une retenue (carry = 1), cela signifie que A - b μ 0 avant la soustraction et donc b doit être soustrait à A.
- si a <- $SHL_{m+1}$(a, 1) ne génère pas de retenue et si A <- $SUB_n$(A, b) ne génère pas non plus de retenue (c'est-à-dire si, après mise à jour de σ, σ est faux (ou ¬σ est VRAI, alors cela signifie que A - b < 0 *avant* la soustraction et donc que b n'aurait pas dû être soustrait à A. Dans ce cas, le procédé réalise une opération d'addition A <- $ADD_n$(A, b) pour restaurer la valeur de A.

Le procédé 1 est sensible aux attaques à canal caché. En effet, on remarque sur le procédé 1 que, à chaque itération, selon la valeur de σ, c'est-à-dire selon la valeur du bit de quotient qui sera obtenu lors de l'itération en cours, on effectue une addition $ADD_n$(A, b) ou pas. Le nombre d'opérations effectuées au cours d'une itération varie donc en fonction du bit de résultat obtenu lors de ladite itération. Or, la consommation en courant au cours de chaque itération et /ou la durée de chaque itération varie en fonction du nombre d'opérations effectuées. En mesurant et en étudiant par exemple la trace laissée par le composant lors de l'exécution du procédé, il est alors possible de déterminer bit à bit la valeur des bits de résultat.

Un autre procédé également connu pour réaliser des division entière est une variante du procédé "papier-crayon", dite "sans restauration" (Non-Restoring Binary Division Algorithm, notamment décrit dans "J.J.F. Cavanagh, Digital Computer Arithmetic, Mac Graw-Hill Company, 1984".

```
Entrée :  a = (0, a_{m-1}, ..., a_0)
               b = (b_{n-1}, ..., b_0)
Sortie :  q = a div b et r = a mod b
σ' <- 1 ; A = (0, a_{m-1}, …, a_{m-n+1})
Pour j = 1 à (m-n+1), faire :
     a <- SHL_{m+1}(a, 1) ; σ <- carry
     si (σ' = VRAI)  alors   A <- SUB_n(A, b)
                             σ <- σ OU carry
                     sinon   A <- ADD_n(A, b)
                             σ <- σ ET carry
     si (σ = VRAI)   alors   lsb(a) = 1
     σ' <- σ
Fin Pour
si (¬σ = VRAI) alors A <- ADD_n(A, b)
               Procédé 2
```

Par rapport au procédé 1, le procédé utilise une nouvelle variable σ' pour conserver la valeur de σ obtenue à l'itération précédente. Ici, selon la valeur de σ, on effectue une addition ou une soustraction. Dit autrement, si au cours d'une itération, b est soustrait à tord à A, alors la valeur de A est restaurée au cours de l'itération suivante, et non plus à la fin de l'itération en cours comme dans le cas du procédé 1.

Quelle que soit la valeur de σ au cours d'une itération, le procédé réalise le même nombre d'opérations au cours de chaque itération. Cette précaution n'est cependant pas suffisante pour protéger le procédé contre les attaques à canal caché. En effet, à chaque itération, on réalise une opération de décalage $a$ <- $SHL_{m+1}(a, 1)$ puis, selon la valeur de σ, une addition $A$ <- $ADD_n(A, b)$ ou une soustraction $A$ <- $SUB_n(A, b)$.

Or, la réalisation d'une soustraction est plus longue et consomme plus d'énergie que la réalisation d'une opération d'addition. En effet, le plus souvent, les moyens de calcul utilisés pour mettre en oeuvre le procédé ne comprennent pas de circuit de soustraction. L'opération de soustraction est réalisée en calculant d'abord le complément à $2^n$ de b, noté $\bar{b}$, puis en additionnant $\bar{b}$ à A, la retenue éventuelle de l'addition étant mémorisée dans la variable carry. Ce mode de réalisation d'une soustraction est justifié par le fait que, par définition de $\bar{b}$, on a $b + \bar{b} = 2^n$. On a donc $A - b = A + \bar{b} - 2^n = A + \bar{b} \bmod (2^n)$, $\bmod (2^n)$ étant une réduction modulo $2^n$. Deux opérations, une opération de complément à $2^n$ et une addition, sont donc en pratique nécessaires pour réaliser une soustraction.

Comme les procédés connus de division entière ne sont pas protégés contre les attaques à canal caché, tout procédé cryptographique utilisant les procédés de division entière connu ne sont donc pas plus protégés contre de telles attaques à canal caché.

Par ailleurs, statistiquement, 50% des bits du quotient obtenu par un procédé de division sont égaux à 0, ce qui signifie que statistiquement, le procédé compense une soustraction sur deux faite à tord. Le temps d'exécution du procédé 1 est donc statistiquement 1,5 fois plus long que le temps d'exécution du procédé 2.

Au vu des problèmes des procédés cryptographiques actuels, un objet essentiel de l'invention est un nouveau procédé de réalisation d'une division entière, protégé contre les attaques à canal caché.

Un objet supplémentaire de l'invention est un procédé de réalisation d'une division entière dont le temps d'exécution est très faible.

Un objet supplémentaire également de l'invention est un procédé de réalisation d'une division entière au cours duquel seul le registre contenant la donnée initiale a est modifié, remplacé par le quotient et le résultat, tout autre registre de la mémoire (et notamment le registre contenant initialement la donnée b) restant inchangé à la fin de l'exécution du procédé.

Avec cet objectif principal et ces objectifs subsidiaires en vue, l'invention propose un procédé cryptographique au cours duquel on réalise une division entière de type q = a div b et r = a mod b, avec a un nombre de m bits, b un nombre de n bits avec n inférieur ou égal à m et $b_{n-1}$ non nul, $b_{n-1}$ étant le bit de poids le plus fort de b, procédé au cours duquel, à chaque itération d'une boucle indicée par i variant entre 1 et m-n+1, on réalise une division partielle d'un mot A de n bits du nombre a par le nombre b pour obtenir un bit du quotient q.

Selon l'invention, les mêmes opérations sont réalisées à chaque itération, quelque soit la valeur du bit de quotient obtenu.

Ainsi, avec le procédé selon l'invention, il n'est plus possible de déterminer les bits du résultat à partir de la trace laissée lors de l'exécution du procédé de l'invention.

Selon un premier mode de réalisation du procédé de l'invention, à chaque itération, on réalise une opération d'addition du nombre b au mot A et une soustraction du nombre b au mot A.

Selon ce premier mode de réalisation, le procédé comprend de préférence l'ensemble des étapes suivantes :

```
Entrée :  a = (0, a_{m-1}, ..., a_0)
              b = (b_{n-1}, ..., b_0)
Sortie :  q = a div b et r = a mod b
σ' <- 1 ; A = (0, a_{m-1}, ..., a_{m-n+1})
Pour j = 1 à (m-n+1), faire :
    a <- SHL_{m+1}(a, 1) ; σ <- carry
    A <- (σ')SUB_n(A, b) + (¬σ')ADD_n(A, b)
    σ <- (σ ET σ') / (σ ET carry) / (σ' ET carry)
    lsb(a) <- σ
    σ' <- σ
  Fin Pour
  si (¬σ = VRAI) alors A <- ADD_n(A, b)
```

Dans ce mode de réalisation, la variable carry ci-dessus désigne la retenue résultant de l'opération $SUB_n(A, b)$ lorsque σ' vaut 1 et la retenue résultant de l'opération $ADD_n(A, b)$ lorsque σ' vaut 0.

Selon un deuxième mode de réalisation du procédé selon l'invention, à chaque itération, on réalise une opération d'addition soit du nombre b soit d'un nombre $\overline{b}$ complémentaire du nombre b avec le mot A.

De préférence, au cours de chaque itération, on réalise également une mise à jour d'une première variable (σ') en fonction du bit du quotient produit, la dite première variable (σ') indiquant si, lors de l'itération suivante, le nombre b ou le nombre $\overline{b}$ doit être additionné au mot A.

De préférence encore, selon ce mode de réalisation, le procédé comprend l'ensemble des étapes suivantes :

```
Entrée :  a = (0, a_{m-1}, ..., a_0)
              b = (b_{n-1}, ..., b_0)
Sortie :  q = a div b et r = a mod b
A = (0, a_{m-1}, ..., a_{m-n+1}) ; σ' <- 1 ;  b̄ <- CPL2_n(b)
Pour j = 1 à (m-n+1), faire :
    a <- SHL_{m+1}(a, 1) ; σ <- carry
    d_{addr} <- b_{addr} + σ'( b̄_{addr} - b_{addr})
    A <- ADD_n(A, d)
    σ <- (σ ET σ') / (σ ET carry) / (σ' ET carry)
    lsb(a) <- σ
    σ' <- σ
  Fin Pour
  si (¬σ = VRAI) alors A <- ADD_n(A, b)
```

Selon un troisième mode de réalisation du procédé selon l'invention, à chaque itération, on réalise une opération de complément à $2^n$ d'une donnée actualisée (b ou $\overline{b}$) ou d'une donnée fictive (c ou $\overline{c}$) puis une opération d'addition de la donnée actualisée avec le mot A.

De préférence, au cours de chaque itération, on réalise également à chaque itération une mise à jour d'une deuxième variable (δ) en fonction du bit du quotient produit, la dite deuxième variable (δ) indiquant si, lors de l'itération suivante, l'opération de complément à 2n doit être réalisée sur la donnée actualisée ou sur la donnée fictive.

De préférence encore, au cours de chaque itération, on réalise également à chaque itération la mise à jour d'une troisième variable (β) indiquant si la donnée actualisée est égale au nombre b ou au nombre complémentaire $\bar{b}$.

De préférence encore, selon ce mode de réalisation, le procédé comprend l'ensemble des étapes suivantes :

```
Entrée :  a = (0, a_{m-1}, … , a_0)
           b = (b_{n-1}, …, b_0)
Sortie : q = a div b and r = a mod b
σ' <- 1 ; β <- 1, γ <- 1 ; A = (0, a_{m-1}, …, a_{m-n+1})
pour j = 1 à (m-n+1) faire
   a <- SHL_{m+1}(a, 1) ; σ <- carry
   δ <- σ' / β
   d_{addr} <- b_{addr} + δ(c_{addr} - b_{addr})
   d <- CPL2_n(d)
   A <- ADD_n(A, b)
   σ <- (σ ET σ') / (σ ET carry) / (σ' ET carry)
   β <- ¬σ' ; γ <- γ / δ; σ' <- σ
   lsb(a) = σ
fin pour
si (¬β = VRAI) alors b <- CPL2_n(b)
si (¬γ = VRAI) alors c <- CPL2_n(c)
si (¬σ = VRAI) alors A <- ADD_n(A, b)
```

L'invention concerne également un composant électronique comprenant des moyens de calcul programmés pour mettre en oeuvre un procédé tel que décrit ci-dessus, les moyens de calcul comprenant notamment une unité centrale associée à une mémoire comprenant plusieurs registres pour mémoriser les données a et b.

Enfin, l'invention concerne également une carte à puce comprenant un circuit intégré tel que décrit ci-dessus.

L'invention sera mieux comprise et d'autres caractéristiques et avantages apparaîtront à la lecture de la description qui va suivre, d'exemples de réalisation de procédés de division entière selon l'invention.

Dans un 1$^{er}$ exemple de mise en oeuvre de l'invention, on réalise un procédé sécurisé contre les attaques à canal caché en supprimant les opérations de test (de type si ... alors ... si non ...) du procédé 2 et donc les conséquences de leur présence.

Selon l'invention, on remplace, dans le procédé 2, les étapes si ... alors ... sinon par les trois étapes suivantes :

```
A <- σ'SUB_n(A, b) + (¬σ')ADD_n(A, b)


σ <- (σ ET σ') / (σ ET carry) / (σ' ET carry)


lsb(a) <- σ
```

On obtient ainsi le procédé selon l'invention suivant :

```
Entrée :  a = (0, a_{m-1}, ..., a_0)
                b = (b_{n-1}, ..., b_0)
Sortie :  q = a div b et r = a mod b
A = (0, a_{m-1}, …, a_{m-n+1}) ; σ' <- 1
Pour j = 1 à (m-n+1), faire :
     a <- SHL_{m+1}(a, 1) ; σ <- carry
     A <- (σ')SUB_n(A, b) + (¬σ')ADD_n(A, b)
     σ <- (σ ET σ') / (σ ET carry) / (σ' ET carry)
     lsb(a) <- σ
     σ' <- σ
Fin Pour
si (¬σ = VRAI) alors A <- ADD_n(A, b)
                Procédé 3
```

Le procédé 3 est équivalent au procédé 2 en ce sens qu'il produit le même résultat à partir des mêmes données a et b d'entrée. En effet, dans le procédé 2, lorsque σ' = 1, on réalise l'opération A <- SUB$_n$(A, b) et lorsque σ' = 0, on réalise l'opération A <- ADD$_n$(A, b). Il en est de même dans le procédé 3 puisque σ' = ¬(¬σ'). Par ailleurs, dans le procédé 2, lorsque σ' = 1 on réalise l'opération σ <- σ OU carry, et lorsque σ' = 0 on réalise l'opération σ <- σ ET carry. Ceci peut s'écrire sous la forme

```
σ <- (σ')(σ OU carry) + (¬σ')(σ ET carry),
```

ce qui est logiquement équivalent à

```
σ <- (σ ET σ') / (σ ET carry) / (σ' ET carry)
```

Enfin, dans le procédé 2, en réalisant l'opération a <- SHL$_{m+1}$ (a, 1), on fixe à 0 le bit de poids le plus faible de a (dit autrement lsb(a) = 0) puis, à la fin de l'itération en cours, si σ = 1, on réalise l'opération lsb(a) = 1, sinon, si σ = 0, lsb(a) n'est pas modifié. On peut donc aisément remplacer l'opération {si σ = 1, lsb(a) = 1} par l'opération lsb(a) = σ, quelle que soit la valeur de σ.

Le procédé 3 est non seulement équivalent au procédé 2 mais il est également sûr vis-à-vis des attaques à canal caché. En effet, le procédé ne contient aucune opération de test de type si ... alors ... sinon, et les mêmes opérations sont réalisées à chaque itération, quels que soient le bit de la donnée d'entrée utilisé et / ou le bit de résultat obtenu au cours d'une itération. Il est donc impossible, à partir de la trace laissée par le composant, de séparer les différentes itérations et de déterminer les bits de la donnée d'entrée et / ou de la donnée de sortie.

Dans un 2ème exemple de mise en oeuvre de l'invention, on modifie le procédé 3 selon l'invention en limitant de plus le temps d'exécution du procédé.

Comme on l'a vu précédemment, pour réaliser une opération de soustraction A <- SUB$_n$(A, b), on réalise en pratique une opération $\overline{b}$ = CPL2$_n$(b) de complément à $2^n$ du nombre b puis une opération d'addition de type A <- ADD$_n$(A, $\overline{b}$).

Ce qui signifie, pour le procédé 3, qu'à chaque itération une opération de complément à $2^n$ est réalisée, en plus d'une opération d'addition A <- ADD$_n$(A, b) ou A <- ADD$_n$(A, $\overline{b}$).

Pour diminuer le temps d'exécution, on limite le nombre d'opérations de complément à $2^n$ $\overline{b}$ <- CPL2$_n$(b), on utilise un espace mémoire additionnel pour stocker au début du procédé la valeur de $\overline{b}$. Il suffit alors d'ajouter $\overline{b}$ à A pour effectuer A <- SUB$_n$(A, b) ou d'ajouter b à A pour effectuer A <- ADD$_n$(A, b). Cela permet également de réaliser une seule opération d'addition par itération, de sorte que la vitesse d'exécution est encore augmentée.

On utilise ici deux registres b et $\overline{b}$ pour mémoriser respectivement les données b et $\overline{b}$ et ayant pour adresse $b_{addr}$ et $\overline{b}_{addr}$. On appelle d le registre dont le contenu est additionné au contenu du registre A au cours d'une itération donnée et on appelle $d_{addr}$ son adresse. En pratique, à chaque itération, le registre d est soit le registre contenant b soit

le registre contenant $\bar{b}$. Comme dans le procédé 3, la variable σ' est utilisée pour garder une trace de ce qui s'est passé au cours d'une itération donnée et déterminer si une addition ou une soustraction doit être réalisée à l'itération suivante. En regroupant le tout, on obtient finalement le procédé 4 suivant :

```
Entrée :  a = (0, a_{m-1}, ..., a_0)
          b = (b_{n-1}, ..., b_0)
Sortie :  q = a div b et r = a mod b
A = (0, a_{m-1}, …, a_{m-n+1}) ; σ' <- 1 ;  b̄ <- CPL2_n(b)
Pour j = 1 à (m-n+1), faire :
    a <- SHL_{m+1}(a, 1) ; σ <- carry
    d_{addr} <- b_{addr} + σ'( b̄_{addr} - b_{addr})
    A <- ADD_n(A, d)
    σ <- (σ ET σ') / (σ ET carry) / (σ' ET carry)



    lsb(a) <- σ
    σ' <- σ
Fin Pour
si (¬σ = VRAI) alors A <- ADD_n(A, b)
```

                              <u>Procédé 4</u>

Dans un 3<sup>ème</sup> exemple de mise en oeuvre de l'invention, on modifie le procédé 4 selon l'invention en limitant l'espace mémoire utilisé pour mettre en oeuvre le procédé.

Pour cela, la valeur $\bar{b}$ complémentaire de b résultat de l'opération $CPL2_n(b)$ est mémorisée à la place de la valeur initiale de b, dans le même registre. L'opération de soustraction est ainsi réalisée en remplaçant b par son complément $\bar{b}$ dans le même registre puis en additionnant à A le contenu du dit registre.

De plus, on évite le calcul de valeurs inutiles de $\bar{b}$ (c'est le cas lorsque deux itérations successives j et j+1 utilisent toutes deux la même addition soit A <- A+b soit A <- A + $\bar{b}$). Pour cela, on utilise un autre registre c dont le contenu, indifférent ou fictif, est remplacé par son complément à $2^n$ lorsqu'il n'est pas nécessaire de remplacer le contenu du registre contenant initialement b (c'est-à-dire lorsque deux itérations successives utilisent soit b soit $\bar{b}$). En pratique, le registre c est un registre quelconque de la mémoire, de même taille que le registre contenant b, mais différent des registres contenant initialement a ou b. Le registre c peut être utilisé par ailleurs pour réaliser d'autres opérations. A la fin du procédé de l'invention, le registre c contient sa valeur initiale, c'est-à-dire celle qu'il avait avant exécution du procédé. La valeur initiale du contenu du registre c est totalement indifférente car cette valeur n'est pas réellement utilisée dans le cadre du procédé selon l'invention.

On appelle $d_{addr}$ l'adresse du registre contenant la valeur qui sera remplacée par son complément à $2^n$ lors de l'itération en cours : $d_{addr}$ est soit $b_{addr}$ si le contenu du registre contenant initialement b doit être complémenté à $2^n$, soit $c_{addr}$ sinon. On appelle d le contenu du registre dont l'adresse est $d_{addr}$.

On utilise également des variables β et γ pour garder une trace de l'état de la valeur contenue dans les registres localisés à l'adresse $b_{addr}$ et $c_{addr}$. Cet état est soit la valeur originale soit la valeur originale complémentée à $2^n$. On choisit β = 1 (resp. γ = 1) lorsque la valeur localisée à l'adresse $b_{addr}$ (resp. $c_{addr}$) est la valeur originale, et β = 0 (resp. γ = 0) lorsque la valeur localisée à l'adresse $b_{addr}$ (resp. $c_{addr}$) est le complément à $2^n$ de la valeur originale. La variable σ' est utilisée pour garder une trace de la valeur de la variable σ à l'itération précédente. Comme précédemment, σ' = 0 signifie qu'une soustraction (A <- $SUB_n(A, b)$ = $ADD_n(A, \bar{b})$) non nécessaire a été effectuée à l'itération précédente et qu'une opération d'addition A <- $ADD_n(A, b)$ doit être réalisée pendant l'itération en cours pour compenser. Inversement, σ' = 1 signifie qu'aucune soustraction n'a été effectuée à tord lors de l'itération précédente et qu'une soustraction doit être effectuée lors de l'itération en cours.

On obtient la table de vérité suivante :

| valeurs précédentes | | | | valeurs actualisées | |
|---|---|---|---|---|---|
| $\sigma'$ | $\beta$ | $\gamma$ | | $\beta$ | $\gamma$ |
| 0 | 0 | 0 | | 1 | 0 |
| 0 | 0 | 1 | | 1 | 1 |
| 0 | 1 | 0 | | 1 | 1 |
| 0 | 1 | 1 | | 1 | 0 |
| 1 | 0 | 0 | | 0 | 1 |
| 1 | 0 | 1 | | 0 | 0 |
| 1 | 1 | 0 | | 0 | 0 |
| 1 | 1 | 1 | | 0 | 1 |

On en déduit :

$$\beta \;<-\; \neg\sigma'$$

$$\gamma \;<-\; \gamma \;/\; \sigma' \;/\; \beta$$

En regroupant le tout on obtient finalement le procédé 5 suivant :

```
Entrée :  a = (0, a_{m-1}, … , a_0)
          b = (b_{n-1}, …, b_0)
Sortie : q = a div b and r = a mod b
σ' <- 1 ; β <- 1, γ <- 1 ; A = (0, a_{m-1}, …, a_{m-n+1})
pour j = 1 à (m-n+1) faire
   a <- SHL_{m+1}(a, 1) ; σ <- carry
   δ <- σ' / β
   d_{addr} <- b_{addr} + δ(c_{addr} - b_{addr})
   d <- CPL2_n(d)
   A <- ADD_n(A, b)
   σ <- (σ ET σ') / (σ ET carry) / (σ' ET carry)
   β <- ¬σ' ; γ <- γ / δ; σ' <- σ·
   lsb(a) = σ
fin pour
si (¬β = VRAI) alors b <- CPL2_n(b)
si (¬γ = VRAI) alors c <- CPL2_n(c)
si (¬σ = VRAI) alors A <- ADD_n(A, b)
                 Procédé 5
```

De manière générale, l'avantage essentiel de l'invention par rapport aux autres procédés connus réalisant la même opération est qu'il est sûr vis à vis des attaques à canal caché, et notamment des attaques de type SPA. De plus, pour être mis en oeuvre, le procédé selon l'invention ne demande pas plus de ressources (notamment en terme de temps d'exécution et d'espace mémoire) que les procédés connus de division entière, non protégés.

**Revendications**

1. Procédé cryptographique mis en oeuvre par un composant électronique, au cours duquel on réalise une division entière protégée contre les attaques à canaux cachés de type q = a div b et r = a mod b, avec q un quotient, a un nombre de m bits, b un nombre de n bits avec n inférieur ou égal à m et $b_{n-1}$ non nul, $b_{n-1}$ étant le bit de poids le plus fort de b, procédé au cours duquel, à chaque itération d'une boucle indicée par i variant entre 1 et m-n+1, on réalise une division partielle d'un mot A de n bits par le nombre b pour obtenir un bit du quotient q, le mot A correspondant aux n bits de poids les plus forts d'un registre du composant contenant initialement le nombre a et le mot A étant modifié à chaque itération,
   le procédé étant **caractérisé en ce que**, la réalisation de la division partielle du mot A par le nombre b comprend la réalisation de mêmes opérations à chaque itération, quelle que soit la valeur du bit de quotient obtenu, les mêmes opérations réalisées comprenant une addition du nombre b au mot A et une soustraction du nombre b au mot A.

2. Procédé cryptographique mis en oeuvre par un composant électronique, au cours duquel on réalise une division entière protégée contre les attaques à canaux cachés de type q = a div b et r = a mod b, avec q un quotient, a un nombre de m bits, b un nombre de n bits avec n inférieur ou égal à m et $b_{n-1}$ non nul, $b_{n-1}$ étant le bit de poids le plus fort de b, procédé au cours duquel, à chaque itération d'une boucle indicée par i variant entre 1 et m-n+1, on réalise une division partielle d'un mot A de n bits par le nombre b pour obtenir un bit du quotient q, le mot A correspondant aux n bits de poids les plus forts d'un registre du composant contenant initialement le nombre a et le mot A étant modifié à chaque itération,
   le procédé étant **caractérisé en ce que**, la réalisation de la division partielle du mot A par le nombre b comprend la réalisation de mêmes opérations à chaque itération, quelle que soit la valeur du bit de quotient obtenu, les mêmes opérations réalisées comprennent une opération d'addition soit du nombre b ou soit d'un nombre $\bar{b}$ au mot A, le nombre $\bar{b}$ étant un complément à $2^n$ du nombre b.

3. Procédé selon la revendication 2, au cours duquel, à chaque itération, on réalise également une mise à jour d'une première variable (σ') en fonction du bit de quotient obtenu lors de l'itération en cours, pour indiquer, lors de l'itération suivante, si le nombre b doit être additionné au mot A ou si le nombre $\bar{b}$ doit être additionné au mot A.

4. Procédé cryptographique mis en oeuvre par un composant électronique, au cours duquel on réalise une division entière protégée contre les attaques à canaux cachés de type q = a div b et r = a mod b, avec q un quotient, a un nombre de m bits, b un nombre de n bits avec n inférieur ou égal à m et $b_{n-1}$ non nul, $b_{n-1}$ étant le bit de poids le plus fort de b, procédé au cours duquel, à chaque itération d'une boucle indicée par i variant entre 1 et m-n+1, on réalise une division partielle d'un mot A de n bits par le nombre b pour obtenir un bit du quotient q, le mot A correspondant aux n bits de poids les plus forts d'un registre du composant contenant initialement le nombre a et le mot A étant modifié à chaque itération,
   le procédé étant **caractérisé en ce que**, la réalisation de la division partielle du mot A par le nombre b comprend la réalisation de mêmes opérations à chaque itération, quelle que soit la valeur du bit de quotient obtenu, les mêmes opérations réalisées comprennent une opération de complément à $2^n$ du contenu b ou $\bar{b}$ du registre contenant initialement le nombre b ou d'un contenu c ou $\bar{c}$ d'un autre registre puis une opération d'addition du contenu du registre contenant initialement b avec le mot A.

5. Procédé selon la revendication 4, au cours duquel on réalise également à chaque itération une opération de mise à jour d'une deuxième variable (δ) indiquant si, lors de l'itération suivante, l'opération de complément à $2^n$ doit être réalisée sur le contenu du registre contenant initialement le nombre b ou sur le contenu de l'autre registre.

6. Procédé selon l'une des revendications 4 ou 5, dans lequel on réalise également à chaque itération, une mise à jour d'une troisième variable (β) indiquant si le contenu du registre contenant initialement le nombre b est égal à la donnée b ou à son complément à $2^n$.

7. Composant électronique comprenant des moyens de calcul programmés pour mettre en oeuvre un procédé selon l'une des revendications 1 à 6, les moyens de calcul comprenant notamment une unité centrale associée à une mémoire comprenant plusieurs registres pour mémoriser les données a et b.

8. Carte à puce comprenant un circuit intégré selon la revendication 7.

**Claims**

1. Cryptographic method implemented by an electronic component during which an integer division is performed protected against a covert channel attacks type q = a div b and r = a mod b, where q is a quotient, a is a number of m bits, b is a number of n bits where n is less than or equal to m and $b_{n-1}$ is not zero, $b_{n-1}$ being the most significant bit of b, a method during which at each iteration of a loop indexed by i varying between 1 and m-n+1, a partial division is performed of a word A of n bits by the number b to obtain a bit of quotient q, the word A corresponding to n most significant bits of a register of the component initially containing the number a and the word A being modified on each iteration, the method being **characterised in that** performance of the partial division of the word A by the number b comprises performance of the same operations at each iteration whatever the value of the bit of the quotient obtained, the same operations performed comprising an addition of number b to word A and a subtraction of number b from word A.

2. Cryptographic method implemented by an electronic component during which an integer division is performed protected against a covert channel attacks type q = a div b and r = a mod b, where q is a quotient, a is a number of m bits, b is a number of n bits where n is less than or equal to m and $b_{n-1}$ is not zero, $b_{n-1}$ being the most significant bit of b, a method during which at each iteration of a loop indexed by i varying between 1 and m-n+1, a partial division is performed of a word A of n bits by the number b to obtain a bit of quotient q, the word A corresponding to n most significant bits of a register of the component initially containing the number a and the word A being modified on each iteration, the method being **characterised in that** performance of the partial division of the word A by the number b comprises performance of the same operations on each iteration whatever the value of the bit of the quotient obtained, the same operations performed comprising an operation of addition either of number b or number $\bar{b}$ to word A, number $\bar{b}$ being a complement to $2^n$ of number b.

3. Method according to claim 2 during which, at each iteration, an update is performed of the first variable (σ') as a function of the bit of the quotient obtained during the current iteration, in order to indicate, during the next iteration, whether the number b must be added to the word A or whether the number $\bar{b}$ must be added to the word A.

4. Cryptographic method implemented by an electronic component during which an integer division is performed protected against a covert channel attacks type q = a div b and r = a mod b, where q is a quotient, a is a number of m bits, b is a number of n bits where n is less than or equal to m and $b_{n-1}$ is not zero, $b_{n-1}$ being the most significant bit of b, a method during which at each iteration of a loop indexed by i varying between 1 and m-n+1, a partial division is performed of a word A of n bits by the number b to obtain a bit of quotient q, the word A corresponding to n most significant bits of a register of the component initially containing the number a and the word A being modified on each iteration, the method being **characterised in that** performance of the partial division of the word A by the number b comprises performance of the same operations on each iteration whatever the value of the bit of the quotient obtained, the same operations performed comprising an operation of complementing to $2^n$ the content b or $\bar{b}$ of the register containing initially number b, or content c or $\bar{c}$ of another register, then an operation of adding the content of the register containing initially b with the word A.

5. Method according to claim 4, during which, at each iteration, an operation is performed of updating a second variable (δ) indicating whether, on the next iteration, the operation of complementing to $2^n$ must be performed on the content of the register containing initially number b or on the content of another register.

6. Method according to any one of claims 4 or 5, in which, also at each iteration, an update is performed of a third variable (β) indicating whether the content of the register containing initially number b is equal to the datum b or its complement to $2^n$.

7. Electronic component comprising calculation means programmed to implement a method according to any one of claims 1 to 6, the calculation means comprising in particular a central unit associated with a memory containing several registers to store data a and b.

8. Chip card comprising an integrated circuit according to claim 7.

**Patentansprüche**

1. Von einer elektronischen Komponente eingesetztes Geheimschriftverfahren, bei dem eine ganze Teilung durchgeführt wird, die vor Angriffen mit verdecktem Kanal geschützt ist, von der Art q = a div b und r = a mod b, wobei q ein Quotient ist, a eine Zahl mit m Bits, b eine Zahl mit n Bits mit n unter oder gleich m und $b_{n-1}$ nicht null, wobei $b_{n-1}$ das höherwertige Bit von b ist, ein Verfahren, in dessen Verlauf bei jeder Iteration einer Schleife mit Index i, der zwischen 1 und m-n+1 variiert, eine teilweise Teilung eines Wortes A mit n Bits durch die Zahl b durchgeführt wird, um ein Bit des Quotienten q zu erzielen, wobei das Wort A den n höherwertigen Bits eines Registers der Komponente entspricht, die ursprünglich die Zahl a enthält, und wobei das Wort A bei jeder Iteration verändert wird; Wobei das Verfahren **dadurch gekennzeichnet ist, daß** die Ausführung der teilweisen Teilung des Wortes A durch die Zahl b die Ausführung gleicher Operationen bei jeder Iteration und ungeachtet des Wertes des Bits des erzielten Quotienten umfaßt, wobei die gleichen durchgeführten Operationen eine Addition der Zahl b zum Wort A und eine Subtraktion der Zahl b vom Wort A umfassen.

2. Von einer elektronischen Komponente eingesetztes Geheimschriftverfahren, bei dem eine ganze Teilung durchgeführt wird, die vor Angriffen mit verdecktem Kanal geschützt ist, von der Art q = a div b und r = a mod b, wobei q ein Quotient ist, a eine Zahl mit m Bits, b eine Zahl mit n Bits mit n unter oder gleich m und $b_{n-1}$ nicht null, wobei $b_{n-1}$ das höherwertige Bit von b ist, ein Verfahren, in dessen Verlauf bei jeder Iteration einer Schleife mit Index i, der zwischen 1 und m-n+1 variiert, eine teilweise Teilung eines Wortes A mit n Bits durch die Zahl b durchgeführt wird, um ein Bit des Quotienten q zu erzielen, wobei das Wort A den n höherwertigen Bits eines Registers der Komponenten entspricht, die ursprünglich die Zahl a enthält, und wobei das Wort A bei jeder Iteration verändert wird; Wobei das Verfahren **dadurch gekennzeichnet ist, daß** die Ausführung der teilweisen Teilung des Wortes A durch die Zahl b die Ausführung gleicher Operationen bei jeder Iteration und ungeachtet des Wertes des Bits des erzielten Quotienten umfaßt, wobei die gleichen durchgeführten Operationen eine Operation mit Addition entweder der Zahl b oder einer Zahl $\overline{b}$ zum Wort A umfassen, wobei die Zahl $\overline{b}$ eine Ergänzung auf $2^n$ der Zahl b ist.

3. Verfahren nach Anspruch 2, **dadurch gekennzeichnet, daß** in dessen Verlauf bei jeder Iteration auch eine Aktualisierung einer ersten Variablen (σ') in Abhängigkeit des Bits des bei der laufenden Iteration erzielten Quotienten durchgeführt wird, um bei der nachfolgenden Iteration anzugeben, ob die Zahl b zum Wort A addiert werden soll, oder ob die Zahl $\overline{b}$ zum Wort A addiert werden muß.

4. Von einer elektronischen Komponente eingesetztes Geheimschriftverfahren, bei dem eine ganze Teilung durchgeführt wird, die vor Angriffen mit verdecktem Kanal geschützt ist, von der Art q = a div b und r = a mod b, wobei q ein Quotient ist, a eine Zahl mit m Bits, b eine Zahl mit n Bits mit n unter oder gleich m und $b_{n-1}$ nicht null, wobei $b_{n-1}$ das höherwertige Bit von b ist, ein Verfahren, in dessen Verlauf bei jeder Iteration einer Schleife mit Index i, der zwischen 1 und m-n+1 variiert, eine teilweise Teilung eines Wortes A mit n Bits durch die Zahl b durchgeführt wird, um ein Bit des Quotienten q zu erzielen, wobei das Wort A den n höherwertigen Bits eines Registers der Komponenten entspricht, die ursprünglich die Zahl a enthält, und wobei das Wort A bei jeder Iteration verändert wird; Wobei das Verfahren **dadurch gekennzeichnet ist, daß** die Ausführung der teilweisen Teilung des Wortes A durch die Zahl b die Ausführung gleicher Operationen bei jeder Iteration und ungeachtet des Wertes des Bits des erzielten Quotienten umfaßt, wobei die gleichen durchgeführten Operationen umfassen eine Operation mit Ergänzung auf $2^n$ des Inhalts b oder $\overline{b}$ des Registers, das ursprünglich die Zahl b enthält, oder eines Inhalts c oder $\overline{c}$ eines anderen Registers, dann eine Operation mit Addition des Inhalts des ursprünglich b enthaltenden Register zum Wort A.

5. Verfahren nach Anspruch 4, **dadurch gekennzeichnet, daß** in dessen Verlauf ebenfalls bei jeder Iteration eine Operation mit Aktualisierung einer zweiten Variablen (δ) durchgeführt wird, die angibt, ob bei der nachfolgenden Iteration die Operation der Ergänzung auf $2^n$ am Inhalt des Registers durchgeführt werden muß, das ursprünglich die Zahl b enthält, oder am Inhalt des anderen Registers.

6. Verfahren nach einem beliebigen der vorstehenden Ansprüche 4 oder 5, **dadurch gekennzeichnet, daß** in dessen Verlauf ebenfalls bei jeder Iteration eine Operation mit Aktualisierung einer dritten Variablen (β) durchgeführt wird, die angibt, ob der Inhalt des ursprünglich die Zahl b enthaltenden Registers gleich der Größe b oder ihrer Ergänzung auf $2^n$ ist.

7. Elektronische Komponente, die Berechnungsmittel umfaßt, die so programmiert sind, daß ein Verfahren nach einem beliebigen der vorstehenden Ansprüche 1 bis 6 eingesetzt wird, wobei die Berechnungsmittel insbesondere eine Zentraleinheit umfassen, die einem Speicher zugeordnet ist, der mehrere Register zur Speicherung der Daten a und b umfaßt.

8. Chipkarte, die einen integrierten Schaltkreis nach Anspruch 7 umfaßt.

EP 1 565 812 B1

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 5166978 A

**Littérature non-brevet citée dans la description**

• Advances in Cryptology - CRYPTO'99. **PAUL KO-CHER.** Lecture Notes in Computer Science. Springer-Verlag, 1999, vol. 1666, 388-397
• Implementing the RSA public key encryption algorithm on a standard digital signal processing. **P. BARRET.** Lecture Notes in Computer Science. Springer Verlag, 1987, vol. 263, 311-323

• **JJ QUISQUATER ; C COUVREUR.** Fast decipherment algorithm for RSA public key cryptosystem. *Electronics Letters,* Octobre 1982, vol. 18, 905-907